(19) Europäisches Patentamt / European Patent Office / Office européen des brevets

(11) **EP 3 118 574 B1**

(12) **EUROPÄISCHE PATENTSCHRIFT**

(45) Veröffentlichungstag und Bekanntmachung des Hinweises auf die Patenterteilung:
**19.09.2018  Patentblatt 2018/38**

(51) Int Cl.:
*G01B 11/02* *(2006.01)*     *G01B 11/06* *(2006.01)*

(21) Anmeldenummer: **16179181.9**

(22) Anmeldetag: **13.07.2016**

(54) **VERFAHREN ZUR HERSTELLUNG EINES FORMBAUTEILS**

METHOD FOR MANUFACTURING A MOULDED PART

PROCEDE DE FABRICATION D'UN COMPOSANT DE FORMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2015  DE 102015213124**

(43) Veröffentlichungstag der Anmeldung:
**18.01.2017  Patentblatt 2017/03**

(73) Patentinhaber:
- **ThyssenKrupp Marine Systems GmbH**
  **24143 Kiel (DE)**
- **thyssenkrupp AG**
  **45143 Essen (DE)**

(72) Erfinder:
- **Krafft, Henning**
  **24116 Kiel (DE)**
- **Schlotfeldt, Rolf**
  **24214 Lindau (DE)**
- **Staack, Ingo**
  **24217 Schoenberg (DE)**
- **Fluck, Oliver**
  **24118 Kiel (DE)**

(74) Vertreter: **thyssenkrupp Intellectual Property GmbH**
**ThyssenKrupp Allee 1**
**45143 Essen (DE)**

(56) Entgegenhaltungen:
WO-A1-90/09560     DE-A1-102011 015 987
DE-A1-102013 114 707     FR-A1- 2 746 705
US-A- 5 056 922     US-A- 5 442 573

**Beschreibung**

Die Erfindung betrifft ein Verfahren zur Herstellung eines Formbauteils.

Der Herstellungsprozess von Formbauteilen ist durch ein interaktives Vorgehen geprägt. In mehreren Schritten wird eine Soll-Geometrie durch Auftragen oder Abtragen hergestellt. Am Ende eines Iterationsschritts ist der Ist-Stand mit der Soll-Geometrie abzugleichen. Hierzu muss die Arbeit des Auf- oder Abtragens unterbrochen und das Formbauteil gegebenenfalls bewegt werden. Gegebenenfalls kann ein Vergleich zwischen der Soll-Geometrie und der Ist-Geometrie durch Erfassen der Oberfläche durchgeführt werden. Diese Unterbrechungen führen zu einer Verlangsamung des Prozesses.

Aus der DE 10 2013 114 707 A1 ist Verfahren zur Durchführung und Kontrolle eines Bearbeitungsschritts an einem Werkstück, unter Verwendung einer Vorrichtung mit einem einzigen Projektor, einer Fotogrammetrieeinrichtung sowie einer Steuereinheit, der die relative Position von Projektor und Fotogrammetrieeinrichtung bekannt.

Aus der DE 10 2011 015 987 A1 ist ein System zur visuellen Darstellung von Informationen auf realen Objekten mit einer einzigen Projektionseinheit zur grafischen oder bildlichen Übertragung einer Information auf ein Objekt bekannt.

Aus der US 5 442 573 A ist eine Vorrichtung zur bestimmung der relativen Position eines Objekts bekannt.

Aus der US 5 056 922 A ist eine Vorrichtung zur optischen Inspektion eines sich bewegenden Werkstückes bekannt.

Aus der WO 9009560 A1 zeigt eine Vorrichtung zur Distanzmessung mit zwei Lichtstrahlen.

Aus der FR 2 746 705 A1 offenbart eine Vorrichtung mit zwei Projektionsvorrichtungen.

Aufgabe der Erfindung ist es, ein Verfahren bereitzustellen, bei welchem der Vergleich des Ist-Standes mit der Soll-Geometrie kontinuierlich und ohne Unterbrechung des Herstellungsprozesses durchgeführt werden kann.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zur Herstellung eines Formbauteils mit einer Soll-Geometrie dient zur Herstellung eines Formbauteils, wobei das Formbauteil durch Auftragen und/oder Abtragen hergestellt wird. Aus einer ersten Projektionsvorrichtung aus einer ersten Richtung wird wenigstens eine erste erste Projektion auf das Formbauteil projiziert und aus einer zweiten Projektionsvorrichtung aus einer zweiten Richtung wenigstens eine erste zweite Projektion auf das Formbauteil projiziert. Hierbei ist die erste Richtung von der zweiten Richtung verschieden. Die erste erste Projektion und die erste zweite Projektion fallen aufeinander, sofern das Formbauteile am Ort der Projektion die Soll-Geometrie erreicht hat.

Durch die Projektion aus zwei unterschiedlichen Richtungen fallen die erste erste Projektion und die erste zweite Projektion auseinander, sofern die Soll-Geometrie für das Formbauteil noch nicht erreicht ist. Ist das Formbauteil zu hoch, so ist die erste erste Projektion in Richtung auf die erste Projektionsvorrichtung, somit in die erste Richtung, von der ersten zweiten Projektion verschoben. Hierdurch kann ein Bearbeiter während der Bearbeitung erkennen, ob weiteres Material abgetragen werden muss. Somit ist keine Unterbrechung der Bearbeitung zum Vergleich der Ist-Form mit der Soll-Geometrie notwendig.. Ist das Formbauteil zu niedrig, so ist die erste erste Projektion in Richtung auf die zweite Projektionsvorrichtung, somit in die zweite Richtung, von der ersten zweiten Projektion verschoben. Hierdurch kann ein Bearbeiter während der Bearbeitung erkennen, ob weiteres Material aufgetragen werden muss. Somit ist keine Unterbrechung der Bearbeitung zum Vergleich der Ist-Form mit der Soll-Geometrie notwendig.

Erfindungsgemäß projizieren die erste Projektionsvorrichtung n erste Projektionen und die zweite Projektionsvorrichtung n zweite Projektionen. Durch die Verwendung von jeweils n Projektionen kann eine beliebige dreidimensionale Oberfläche der Soll-Geometrie in erster Näherung projiziert werden. Hierbei können die n Projektionen jeweils ein identisches Aussehen haben, n verschiedene Aussehen haben oder jeweils aus Gruppen von Projektionen mit jeweils identischem Aussehen gebildet sein.

Erfindungsgemäß wird von dem Formbauteil Material abgetragen, sofern die erste erste Projektion in der ersten Richtung von der ersten zweiten Projektion verschoben ist. Das Abtragen kann beispielsweise durch Schleifen, Spanen, beispielsweise Hobeln, Schmirgeln, Ablatieren, beispielsweise Laser-Ablatieren, erfolgen.

Erfindungsgemäß wird zu dem Formbauteil Material aufgetragen, sofern die erste erste Projektion in die der ersten Richtung entgegengesetzte Richtung von der ersten zweiten Projektion verschoben ist. Das Auftragen kann beispielsweise durch Lamination erfolgen.

In einer weiteren Ausführungsform der Erfindung wird die Geschwindigkeit des Auftragens bzw. Abtragens von Material des Formbauteils in Abhängigkeit des Abstandes der ersten ersten Projektion von der ersten zweiten Projektion gewählt. Je größer der Abstand ist, desto größer ist die Abweichung von der Soll-Geometrie. Es ist daher sinnvoll eine höhere Geschwindigkeit des Auftragens bzw. Abtragen zu wählen. Daher wird besonders bevorzugt eine höhere Geschwindigkeit bei größerem Abstand nur gewählt. Bei der Verwendung von n Projektionen wird die Geschwindigkeit vorzugsweise ortsaufgelöst ermittelt.

In einer weiteren Ausführungsform der Erfindung besteht das Formbauteil aus Kunststoffschichten, insbesondere glasfaserverstärktem Kunststoff.

In einer weiteren Ausführungsform der Erfindung projiziert die erste Projektionsvorrichtung eine erste Farbe und die zweite Projektionsvorrichtung eine zweite Farbe. Die unterschiedlichen Farben ermöglichen eine leichte Erkennung der Abweichung durch den Bearbeiter. Hierdurch ist insbesondere leicht zu erkennen ob die Ist-Form oberhalb oder unterhalb der Soll-Geometrie liegt.

In einer weiteren Ausführungsform der Erfindung projiziert die erste Projektionsvorrichtung eine erste Form und die zweite Projektionsvorrichtung eine zweite Form. Beispielsweise handelt es sich bei der ersten Form um ein Kreuz und bei der zweiten Form um ein X. Auch hierdurch ist eine gute Unterscheidbarkeit und somit eine leichte Erkennung der Abweichung der Ist- Form von der Soll-Geometrie möglich.

In einer alternativen Ausführungsform projizieren die erste Projektionsvorrichtung eine erste Form und die zweite Projektionsvorrichtung eine zweite Form, die von der ersten Form unterschiedlich ist. Die erste Form und die zweite Form sind dabei derart gewählt, dass anhand der Überschneidung die beiden Formen die Größe der Abweichung der Ist- von der Soll-Geometrie abgelesen oder zumindest abgeschätzt werden kann. Beispielsweise handelt es sich bei der ersten Form um ein X oder Kreuz und bei der zweiten Form um konzentrische Kreise. Besonders bevorzugt sind die konzentrischen Kreise in eine zweite und eine dritte Farbe unterteilt, so dass die Richtung der Abweichung abgelesen werden kann.

In einer weiteren Ausführungsform der Erfindung wird zunächst das Formbauteil erfasst, insbesondere wird die Position von Referenzpunkten des Formbauteils erfasst. Aus der erfassten Position der Referenzpunkte wird die exakte Lage der Soll-Geometrie zwischen den Referenzpunkten errechnet und die wenigstens eine erste erste Projektion und die wenigstens eine erste zweite Projektion projiziert.

Eine Vorrichtung, die nicht Bestandteil der Erfindung ist, zur Durchführung des erfindungsgemäßen Verfahrens weist beispielsweise eine erste Projektionsvorrichtung und eine zweite Projektionsvorrichtung auf.

Der Abstand der ersten Projektionsvorrichtung von der zweiten Projektionsvorrichtung, der Abstand der ersten Projektionsvorrichtung von dem Formbauteil und der Abstand der zweiten Projektionsvorrichtung von dem Formbauteil ergeben sich aus der geforderten Fertigungstoleranz. Um eine geforderte Fertigungstoleranz in der Höhe zu erreichen, muss der Winkel, unter welchem die Projektion auftrifft, an den auflösbaren Abstand zwischen zwei Projektionen angepasst werden. Können zwei Projektionen unterschieden werden, welche mindestens einen Abstand a aufwiesen (optische Auflösung) und soll die Fertigungstoleranz in der Höhe den Wert b nicht übersteigen, so muss der Winkel $\alpha$ folgende Bedingung erfüllen:

$$\tan(\alpha) \geq a / b$$

Zwischen einem Strahl der ersten Projektionsvorrichtung und einem zweiten Strahl der Projektionsvorrichtung ergibt sich somit ein Winkel von $2\alpha$. Das Verhältnis vom Abstand zwischen der ersten Projektionsvorrichtung und der zweiten Projektionsvorrichtung zum Abstand der beiden Projektionsvorrichtungen zum Formbauteil ergibt sich hieraus.

Nachfolgend ist eine Vorrichtung, die nicht Bestandteil der Erfindung ist, anhand eines in den Zeichnungen dargestellten Ausführungsbeispiels näher erläutert.

Fig. 1 schematische Darstellung, Oberfläche oberhalb der Soll-Geometrie

Fig. 2 schematische Darstellung, Oberfläche unterhalb der Soll-Geometrie

Fig. 3 schematische Darstellung, Oberfläche auf der Soll-Geometrie

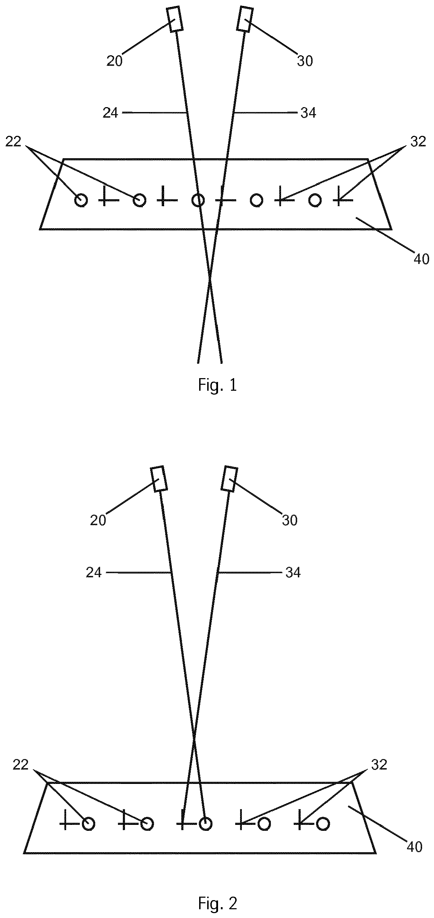

In den Fig. 1 bis Fig. 3 ist das erfindungsgemäße Verfahren anhand einer Vorrichtung schematisch dargestellt. Hierbei sind die Figuren stark vereinfacht, insbesondere ist zur Vereinfachung wie Darstellung der Art, dass die Entfernung zwischen den Projektionsvorrichtungen und der Oberfläche sehr viel größer als der Abstand der Projektionen ist. Aus diesem Grund ist der Strahlengang lediglich schematisch für jeweils eine Projektion dargestellt.

In Fig. 1 ist die Oberfläche des Formbauteils 40 oberhalb der Soll-Geometrie 10. Aus der ersten Projektionsvorrichtung 20 wird eine Gruppe von fünf ersten Projektionen 22 auf die Oberfläche des Formbauteils projiziert, welche kreisförmig sind. Aus der zweiten Projektionsvorrichtung 30 wird eine Gruppe von fünf zweiten Projektionen 32 auf die Oberfläche des Formbauteils projiziert, welche kreuzförmige sind. Der erste Strahl 24 skizziert den Verlauf zwischen der ersten Projektionsvorrichtung 20 und der ersten Projektion 22. Der zweite Strahl 34 skizziert den Verlauf zwischen der zweiten Projektionsvorrichtung 30 und der zweiten Projektion 32. Anhand des Abstandes zwischen der ersten Projektion 23 und der zweiten Projektion 32 ist erkennbar, dass die Oberfläche des Formbauteils 40 nicht der Soll-Geometrie 10 entspricht, sondern dass die Oberfläche des Formbauteils 40 oberhalb der Soll-Geometrie 10 angeordnet ist.

In Fig. 2 ist der Fall dargestellt, dass die Oberfläche des Formbauteils 40 unterhalb der Soll-Geometrie 10 angeordnet ist. Wie in Fig. 1 kommt es zu einem Versatz zwischen den ersten Projektionen 22 und den zweiten Projektionen 32, wobei die Reihenfolge jetzt umgekehrt erscheint. Hierdurch kann ein Bearbeiter leicht erkennen, dass die Oberfläche des Formbauteils 40 unterhalb der Soll-Geometrie 10 angeordnet ist.

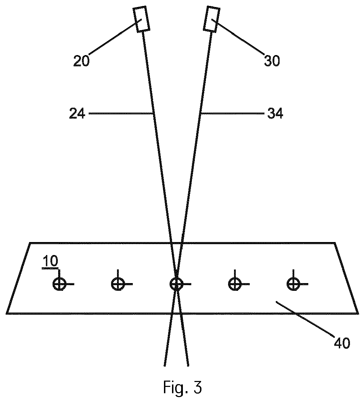

In Fig. 3 ist der Fall dargestellt, dass die Oberfläche des Formbauteils 40 exakt der Soll-Geometrie 10 entspricht. Hierdurch fallen die ersten Projektionen 22 und die zweiten Projektionen 32 übereinander. Der Bearbeiter erkennt unmittelbar, dass eine weitere Bearbeitung nicht notwendig ist.

## Patentansprüche

1. Verfahren zur Herstellung eines Formbauteils mit einer Soll-Geometrie (10), wobei das Formbauteil durch Auftragen und/oder Abtragen hergestellt wird, **wobei** aus einer ersten Projektionsvorrichtung (20) aus einer ersten Richtung wenigstens eine erste erste Projektion (22) auf das Formbauteil projiziert wird, wobei aus einer zweiten Projektionsvorrichtung (30) aus einer zweiten Richtung wenigstens eine erste zweite Projektion (32) auf das Formbauteil projiziert wird, wobei die erste erste Projektion (22) und die erste zweite Projektion (32) aufeinander fallen, sofern das Formbauteile am Ort der Projektion die Soll-Geometrie (10) erreicht hat, **dadurch gekennzeichnet, dass** die erste Projektionsvorrichtung (20) n erste Projektionen (22) und die zweite Projektionsvorrichtung (30) n zweite Projektionen (32) projizieren, wobei von dem Formbauteil Material abgetragen wird, sofern die erste erste Projektion (22) in der ersten Richtung von der ersten zweiten Projektion (32) verschoben ist, wobei zu dem Formbauteil Material aufgetragen wird, sofern die erste erste Projektion (22) in die der ersten Richtung entgegengesetzte Richtung von der ersten zweiten Projektion (32) verschoben ist.

2. Verfahren nach Anspruch 1, **dadurch gekennzeichnet, dass** die Geschwindigkeit des Auftragens bzw. Abtragens von Material des Formbauteils in Abhängigkeit des Abstandes der ersten ersten Projektion (22) von der ersten zweiten Projektion (32) gewählt wird.

3. Verfahren nach Anspruch 2, **dadurch gekennzeichnet, dass** eine höhere Geschwindigkeit bei größerem Abstand gewählt wird.

4. Verfahren nach einem der vorstehenden Ansprüche, **dadurch gekennzeichnet, dass** das Formbauteil aus Kunststoffschichten, insbesondere glasfaserverstärktem Kunststoff, besteht.

5. Verfahren nach einem der vorstehenden Ansprüche, **dadurch gekennzeichnet, dass** das Auftragen durch Laminieren erfolgt.

6. Verfahren nach einem der vorstehenden Ansprüche, **dadurch gekennzeichnet, dass** die erste Projektionsvorrichtung (20) eine erste Farbe projiziert und die zweite Projektionsvorrichtung (30) eine zweite Farbe projiziert.

## Claims

1. Method for manufacturing a moulded part with a desired geometry (10), the moulded part being produced by application and/or removal, at least one first first projection (22) being projected onto the moulded part from a first direction from a first projection device (20), at least one first second projection (32) being projected onto the moulded part from a second direction from a second projection device (30), the first first projection (22) and the first second projection (32) coinciding if the moulded part has reached the desired geometry (10) at the location of the projection, **characterized in that** the first projection device (20) projects n first projections (22), and the second projection device (30) projects n second projections (32), material being removed from the moulded part if the first first projection (22) is shifted from the first second projection (32) in the first direction, material being applied to the moulded part if the first first projection (22) is shifted from the first second projection (32) in the direction opposite to the first direction.

2. Method according to Claim 1, **characterized in that** the speed of application or removal of material of the moulded part is chosen on the basis of the distance of the first first projection (22) from the first second projection (32).

3. Method according to Claim 2, **characterized in that** a higher speed is chosen in the event of a greater distance.

4. Method according to one of the preceding claims, **characterized in that** the moulded part is composed of layers of plastic, in particular glass-fibre-reinforced plastic.

5. Method according to one of the preceding claims, **characterized in that** the application is carried out by lamination.

6. Method according to one of the preceding claims, **characterized in that** the first projection device (20) projects a first colour and the second projection device (30) projects a second colour.

## Revendications

1. Procédé de fabrication d'un composant moulé avec une géométrie théorique (10), dans lequel on fabrique le composant moulé par ajout et/ou enlèvement, dans lequel on projette à partir d'un premier dispositif de projection (20) dans une première direction au moins une première première projection (22) sur le composant moulé, dans lequel on projette à partir d'un second dispositif de projection (30) dans une seconde direction au moins une première deuxième projection (32) sur le composant moulé, dans lequel la première première projection (22) et la première deuxième projection (32) se superposent dans la mesure où le composant moulé a atteint la géométrie théorique (10) à l'endroit de la projection, **caractérisé en ce que** le premier dispositif de projection (20) projette n premières projections (22) et le second dispositif de projection (30) projette n deuxièmes projections (32), dans lequel on enlève de la matière du composant moulé, dans la mesure où la première première projection (22) est déplacée dans la première direction par rapport à la première deuxième projection (32), dans lequel on ajoute de la matière au composant moulé, dans la mesure où la première première projection (22) est déplacée dans la direction opposée à la première direction par rapport à la première deuxième projection (32).

2. Procédé selon la revendication 1, **caractérisé en ce que** l'on choisit la vitesse de l'ajout ou de l'enlèvement de matière au/du composant moulé en fonction de la distance de la première première projection (22) à la première deuxième projection (32).

3. Procédé selon la revendication 2, **caractérisé en ce que** l'on choisit une vitesse plus élevée pour une distance plus grande.

4. Procédé selon l'une quelconque des revendications précédentes, **caractérisé en ce que** le composant moulé se compose de couches de matière plastique, en particulier de matière plastique renforcée de fibres de verre.

5. Procédé selon l'une quelconque des revendications précédentes, **caractérisé en ce que** l'on effectue l'ajout par stratification.

6. Procédé selon l'une quelconque des revendications précédentes, **caractérisé en ce que** le premier dispositif de projection (20) projette une première couleur et le second dispositif de projection (30) projette une seconde couleur.

Fig. 1

Fig. 2

20 30

24 ——————— 34

10

40

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013114707 A1
- DE 102011015987 A1
- US 5442573 A
- US 5056922 A
- WO 9009560 A1
- FR 2746705 A1